# EUROPÄISCHE PATENTANMELDUNG

(11) **EP 3 037 221 A2**
(43) Veröffentlichungstag der Anmeldung: **29.06.2016**
(21) Anmeldenummer: 15196403.8
(22) Anmeldetag: 26.11.2015
(51) Int. Cl.: B25J 9/16

(54) **VERFAHREN UND MANIPULATORANORDNUNG ZUM BEDINGTEN ANHALTEN ZUMINDEST EINES MANIPULATORS AUF EINER BAHN**

(30) Priorität: 22.12.2014 DE 102014226789
(71) Anmelder: KUKA Roboter GmbH, 86165 Augsburg (DE)
(72) Erfinder: TRONNIER, Holger, 86163 Augsburg (DE); HÜTTENHOFER, Manfred, 86405 Meitingen (DE); AURNHAMMER, Andreas, 81929 München (DE); BURKHART, Stefan, 89407 Dillingen a. d. Donau (DE); WIEDEMANN, Günther, 86368 Gersthofen (DE)
(74) Vertreter: Mader, Joachim

(57) **Zusammenfassung**

Die vorliegende Erfindung betrifft ein Verfahren zum bedingten Anhalten zumindest eines Manipulators und eine Manipulatoranordnung. Der Manipulator fährt eine Bahn ab, welche einen Haltepunkt aufweist. Um den Manipulator im Haltepunkt anhalten zu können, wird abhängig von einer Geschwindigkeit des Manipulators ein Bremspunkt auf der Bahn berechnet. Macht der Zustand einer Fahrbedingungsvariablen das Bremsen des Manipulators beim Überschreiten des Bremspunktes erforderlich, wird der Manipulator gebremst.

## Beschreibung

### 1. Gebiet der Erfindung

Die Erfindung betrifft ein Verfahren und eine Manipulatoranordnung zum bedingten Anhalten zumindest eines Manipulators auf einer Bahn. Das Verfahren und die Manipulatoranordnung können beispielsweise in Industrieanwendungen verwendet werden, bei denen eine programmierte Bahn nur dann vollständig gefahren werden darf, wenn eine definierte Fahrbedingung erfüllt ist.

### 2. Hintergrund

Es gib industrielle Anwendungen (z.B. Pressenverkettung, Schutzbereiche), bei denen ein Manipulator eine programmierte Bahn nur dann vollständig abfahren darf, wenn eine definierte Fahrbedingung (z.B. Presse = offen) erfüllt ist. Ist die Fahrbedingung nicht erfüllt, so darf der Manipulator nur bis zu einem bestimmten Haltepunkt fahren. Am Haltepunkt muss der Manipulator vollständig zum Stehen gekommen sein, d.h. angehalten sein. Im Haltepunkt wartet der Manipulator so lange, bis die Fahrbedingung erfüllt ist. Das Anhalten des Manipulators ist somit das vollständige Abbremsen aller Achsen des Manipulators. Der Manipulator ist angehalten wenn die Geschwindigkeit aller Achsen gleich null ist.

Ein Manipulator (Roboter bzw. Industrieroboter) ist gemäß DIN EN ISO 8373 ein automatisch geführter, mit drei oder mehr frei programmierbaren Bewegungsachsen ausgerüsteter Mehrzweckmanipulator, der entweder ortsfest oder mobil in industriellen Anwendungen eingesetzt wird. Er kann Greifer oder Werkzeuge (Endeffektoren) oder Werkstücke führen.

Damit der Manipulator am Haltepunkt anhält, muss an einer hinreichend frühen Stelle auf der Bahn, am so genannten Bremspunkt, mit dem Bremsen des Manipulators begonnen werden, demnach ist der Bremspunkt bevorzugt der Punkt in dem mit dem Bremsen begonnen werden muss, um den Manipulator bis zum Erreichen des Haltepunktes vollständig abzubremsen. Aus dem Stand der Technik sind Bremspunkte bekannt, die fest vorgegebene Punkte sind, die dem Manipulator üblicherweise vom Anwender geteacht oder programmiert werden. Ebenso ist der Haltepunkt ein geteachter Punkt auf der Bahn des Manipulators.

Wie bekannt, ist ein bedingtes Anhalten des Manipulators durch programmgesteuertes Verändern des Overrides möglich. Unter bedingtem Anhalten des Manipulators wird ein Anhalten des Manipulators verstanden, das nur dann erfolgt, wenn eine entsprechende Bedingung erfüllt ist. Eine solche Bedingung kann beispielsweise durch eine Fahrbedingungsvariable, wie nachfolgend beschrieben definiert sein. Als Override wird eine zeitliche Skalierungsgröße der Manipulatorbewegung verstanden. Beträgt der Override 100 %, so verfährt der Manipulator die programmierte Bewegung in der ursprünglich programmierten Zeit. Beträgt der Override beispielsweise 50 %, so verfährt der Manipulator die programmierte Bewegung in der doppelten Zeit. Ist beim Erreichen des Bremspunktes die Fahrbedingung nicht erfüllt, kann durch eine entsprechende Herabsetzung des Overrides die Bewegung des Manipulators verzögert werden und der Manipulator gebremst werden. Nachteilig hierbei ist, dass vom Anwender ein Bremspunkt gefunden werden muss, der möglichst nahe am Haltepunkt liegt und es zugleich ermöglicht den Manipulator bis zum Haltepunkt, unabhängig von der tatsächlichen Geschwindigkeit vollständig abzubremsen. Somit müssen Bremspunkte gewählt werden, die weiter vom Haltepunkt entfernt liegen als für die tatsächliche Geschwindigkeit des Manipulators nötig, was in einer verlängerten Taktzeit resultiert.

Ebenso ist ein bedingtes Anhalten durch Überschleifen des Haltepunktes bekannt. Hierzu wird ebenfalls ein Haltepunkt und ein Bremspunkt vom Anwender geteacht oder programmiert. Erreicht der Manipulator den Bremspunkt, und ist die Fahrbedingung nicht erfüllt, so beginnt der Manipulator mit der Bremsung und fährt zum Haltepunkt. Ist die Fahrbedingung hingegen erfüllt, so wird der Haltepunkt nicht angefahren, sondern mit einem festgelegten Überschleifradius überschliffen. Auch hier muss der Bremspunkt so gewählt werden, dass der Haltepunkt eingehalten werden kann was zu verlängerten Taktzeiten führt. Weiterhin weicht die Bahn beim Bremsen von der Bahn ohne Bremsen ab, d.h. die Bremsung erfolgt nicht bahngetreu. Die Aufgabe der vorliegenden Erfindung ist es die genannten Nachteile auszuräumen. Insbesondere soll ermöglicht werden, einen Haltepunkt auf einer gegebenen Bahn legen oder festlegen zu können, ohne einen zusätzlichen geometrischen Bahnpunkt (bevorzugt Bremspunkt) teachen zu müssen.

### 3. Ausführliche Beschreibung der Erfindung

Die oben genannten Aufgaben werden gelöst durch ein erfindungsgemäßes Verfahren zum bedingten Anhalten zumindest eines Manipulators nach Anspruch 1 und einer Manipulatoranordnung nach Anspruch 5.

Insbesondere werden die oben genannten Aufgaben gelöst durch ein Verfahren zum bedingten Anhalten zumindest eines Manipulators, wobei der zumindest eine Manipulator eine Bahn abfährt, welche Bahn einen Haltepunkt aufweist, und das Verfahren den folgenden Verfahrensschritt umfasst: Berechnen eines, dem Haltepunkt zugeordneten Bremspunktes in Abhängigkeit einer Geschwindigkeit des Manipulators, wobei der Bremspunkt ein Punkt der Bahn ist. Bevorzugt ist die Bahn eine programmierte und/oder vordefinierte Bahn bzw. Bewegungsbahn, die der Manipulator abfährt.

Die Geschwindigkeit des Manipulators wird bevorzugt am Tool Center Point (TCP) ausgewertet. Zur Berechnung des Bremspunktes wird bevorzugt die Soll-Geschwindigkeit des Manipulators zum Berechnungszeitpunkt herangezogen. Besonders bevorzugt wird die aktuelle Geschwindigkeit des Manipulators berücksichtigt.

Durch die Berechnung des Bremspunktes in Abhängigkeit der Geschwindigkeit des Manipulators, wird die Lage des Bremspunktes auf der Bahn des Manipulators vom Haltepunkt so weit entfernt definiert, dass ein Anhalten des Manipulators bis zum Haltepunkt sicher möglich ist. Weiterhin ist die Lage des Bremspunktes so nahe am Haltepunkt, dass die Taktzeit des Manipulators verkürzt wird. Die Berechnung des Bremspunktes wird vorzugsweise zyklisch durchgeführt. Dadurch wird die Lage des Bremspunktes abhängig von der aktuellen Geschwindigkeit des Manipulators aktuell gehalten. Bevorzugt ist der Zyklus der Berechnung nicht an ein festes Zeitintervall gebunden, sondern kann vielmehr angepasst werden.

Weiterhin ermöglicht die Berechnung des Bremspunktes, den Bremsvorgang mit optimierten Bremsparametern durchzuführen. Im Gegensatz zu vorbekannten Lösungen mit fest vorgegebenem Bremspunkt, müssen Bremsparameter, wie die Bremskraft, nicht zwingend angepasst werden, um den Manipulator im Haltepunkt anzuhalten. Stattdessen wird der Bremspunkt derart berechnet, dass eine Bremsung mit optimierten Bremsparametern zu einem Anhalten des Manipulators im Haltepunkt führt. Die Bremsparameter können dabei hinsichtlich Rekuperation, Bremszeit, Verschleiß oder weiteren bekannten Optimierungsparametern optimiert sein.

Die Bahn des Manipulators kann dabei z.B. auf einer Punkt-zu-Punkt Planung (Point-to-Point; PTP) und/oder einer kontinuierlichen Bahnplanung (Continuous Path; CP) basieren. Die so geplante Soll-Bahn wird vom Manipulator(Roboter) abgefahren. Der Haltepunkt, an dem der Manipulator angehalten werden soll, liegt auf der Soll-Bahn und wird punktgenau angefahren. Der Bremspunkt wird typischerweise mittels der Soll-Bahn berechnet. Aufgrund von Trägheiten oder anderen Störeinflüssen kann die tatsächlich gefahrene Bahn des Manipulators (Ist-Bahn) von der Soll-Bahn abweichen. Bevorzugt wird bei der Berechnung des Bremspunktes die Abweichung von Ist-Bahn und Soll-Bahn berücksichtigt, so dass der Bremspunkt bevorzugt auf der Ist-Bahn liegt.

Vorzugsweise umfasst das Verfahren zum bedingten Anhalten zumindest eines Manipulators weiterhin die folgenden Schritte: Überprüfen des Zustands einer Fahrbedingungsvariablen, nach der Berechnung des Bremspunktes und Bremsen des Manipulators, falls der Zustand der Fahrbedingungsvariablen beim Überschreiten des berechneten Bremspunktes ein Bremsen erforderlich macht.

Der Zeitpunkt des Überschreitens des berechneten Bremspunktes wird vorzugsweise vor dem tatsächlichen Überschreiten des berechneten Bremspunktes bestimmt. Dazu wird ausgehend von dem aktuellen Punkt des Manipulators auf der Bahn berechnet, ob der Manipulator, falls in dem darauffolgenden Steuerungstakt die Bremsung eingeleitet würde, noch vor dem geteachten Haltepunkt anhalten könnte. Ist dies nicht der Fall, so wird der Bremspunkt spätestens mit Beginn des nächsten Steuerungstakts vom Manipulator überschritten, und die Bremsung des Manipulators muss eingeleitet werden, falls der Zustand der Fahrbedingungsvariablen ein Bremsen erforderlich macht.

Die Fahrbedingungsvariable ist bevorzugt eine boolesche Größe, welche angibt, ob ein Bremsen des Manipulators erforderlich ist, oder ob die Bahn weiter abgefahren werden darf. Beispielsweise ist eine solche Fahrbedingungsvariable der Zustand einer Presse in einer Pressenverkettungsanwendung. Ist in dem Beispiel die Presse geöffnet (Fahrbedingungsvariable = TRUE), kann der Manipulator ein Werkstück in die Presse einlegen oder daraus entnehmen. Der Manipulator darf die Bahn wie geplant abfahren. Ist die Presse hingegen geschlossen (Fahrbedingungsvariable = FALSE), würde ein, wie geplantes Abfahren der Bahn einen Zusammenstoß von Manipulator und Presse verursachen. Das Bremsen des Manipulators ist also erforderlich.

Alternativ kann die Fahrbedingungsvariable auch eine nicht boolesche Größe sein. Eine solche nicht boolesche Größe kann beispielsweise Informationen über eine nötige Bremsverzögerung enthalten. Die Bremsverzögerung ist eine negative Beschleunigung und bestimmt die Stärke der Bremsung.

Die Überprüfung der Fahrbedingungsvariablen ist vorteilhaft, da der Manipulator nur dann gebremst wird, wenn eine Bremsung erforderlich ist. Ist indes keine Bremsung notwendig, kann die geplante Bahn vom Manipulator ohne Geschwindigkeitseinbruch abgefahren werden.

Bevorzugt wird der Zustand der Fahrbedingungsvariablen zyklisch überwacht, wobei bei einem eingeleiteten Bremsvorgang der Manipulator wieder beschleunigt wird, wenn sich der Zustand der Fahrbedingungsvariablen, während des Bremsens des Manipulators ändert. Der Zustand kann z.B. 10 mal pro Sekunde überwacht werden, oder in anderen geeigneten Zeitabständen.

Die zyklische Überwachung der Fahrbedingungsvariablen ermöglicht einen flexiblen Abbruch des Bremsvorgangs, so dass der Manipulator wieder beschleunigt werden kann, sobald der Zustand der Fahrbedingungsvariablen kein Bremsen mehr erforderlich macht. Sodann wird der Manipulator wieder auf die original geplante Geschwindigkeit beschleunigt und die geplante Bahn wird abgefahren. Folglich wird der durch das eingeleitete Bremsen begründete Zeitverlust begrenzt, sodass die Taktzeit des Manipulators verkürzt wird.

Bevorzugt wird beim Verfahren zum bedingten Anhalten zumindest eines Manipulators die Bremswirkung während eines Bremsvorgangs in Abhängigkeit von einer Fahrbedingungsvariablen angepasst, so dass der Manipulator spätestens am Haltepunkt vollständig stoppt.

Das Anpassen der Bremswirkung ist vorteilhaft, da neben der Lage des Bremspunktes selbst eine weitere Größe zur Verfügung steht, welche direkten Einfluss auf den Punkt hat, an welchem der Manipulator tatsächlich anhält. Somit kann der Manipulator auch dann im geteachten und/oder programmierten Haltepunkt angehalten werden, wenn das Bremsen zu einem Zeitpunkt erforderlich wird, zu welchem Zeitpunkt der für die vorliegende Geschwindigkeit optimale Bremspunkt bereits überschritten ist und der Manipulator mit den optimierten Bremsparametern nicht mehr am geteachten und/oder programmierten Haltepunkt angehalten werden könnte. Bevorzugt kann durch ein stärkeres Bremsen der Manipulator bereits vor dem Erreichen des Haltepunkts angehalten werden, trotz des später Eingeleiteten Bremsung. Besonders bevorzugt soll der Haltepunkt nicht überschritten werden. Ist dies Aufgrund der zu spät eingeleiteten Bremsung nicht mehr möglich, so erfolgt ein möglicher Crash mit verringerter Geschwindigkeit.

Die genannten Aufgaben werden weiter gelöst durch eine Manipulatoranordnung umfassend zumindest einen Manipulator und zumindest eine Steuerungsvorrichtung, wobei der zumindest eine Manipulator dazu eingerichtet ist eine Bahn abzufahren und die Bahn einen Haltepunkt aufweist, und die zumindest eine Steuerungsvorrichtung dazu eingerichtet ist, einen dem Haltepunkt zugeordneten Bremspunkt in Abhängigkeit einer Geschwindigkeit des Manipulators zu berechnen, wobei der Bremspunkt ein Punkt der Bahn ist.

Die Steuerungsvorrichtung steuert den Manipulator. Sie empfängt Signale vom Manipulator und sendet Befehle an den Manipulator. Weiterhin können von der Steuerungsvorrichtung auch externe Signale empfangen und in Befehle an den Manipulator umgesetzt werden. Bevorzugt wird die Fahrbedingungsvariable durch ein externes Signal gesetzt.

Bevorzugt ist die Steuerungsvorrichtung dazu eingerichtet den Zustand einer Fahrbedingungsvariablen zu überprüfen und einen Befehl zum Bremsen des Manipulators zu senden, falls der Zustand der Fahrbedingungsvariablen ein Bremsen erforderlich macht.

Besonders bevorzugt ist die Steuerungsvorrichtung weiter dazu eingerichtet den Zustand der Fahrbedingungsvariablen zyklisch zu überwachen, und bei einem eingeleiteten Bremsvorgang des Manipulators einen Befehl zum Beschleunigen des Manipulators zu senden, wenn sich der Zustand der Fahrbedingungsvariable, während des Bremsens des Manipulators ändert.

Bevorzugt ist die Bremswirkung während eines Bremsvorgangs in Abhängigkeit von der Fahrbedingungsvariablen anpassbar, so dass der Manipulator spätestens am Haltepunkt anhält.

Besonders bevorzugt erfolgt das Bremsen des Manipulators bahntreu. Der Manipulator fährt während des Bremsens die geplante Bahn ab, ohne diese zu verlassen. Dies ist vorteilhaft, da Zusammenstöße mit anderen in der Umgebung befindlichen Gegenständen vermieden werden können. Weiterhin kann der Manipulator nach einem bahntreuen Bremsen durch Beschleunigen die programmierte Bewegung wieder aufnehmen. Der Manipulator fährt folglich nach Abschluss der Beschleunigung mit der programmierten Geschwindigkeit die geplante Bahn weiter ab. Ein Zurückführen des Manipulators auf die geplante Bahn ist nicht erforderlich, wodurch Taktzeit eingespart werden kann.

Vorzugsweise umfasst die Bahn zumindest einen Bahnabschnitt, der ein Spline ist. Ein Spline ist eine Funktion, die stückweise aus Polynomen n-ten Grades zusammengesetzt ist. Dabei werden an den Stellen, an denen zwei Polynomstücke zusammenstoßen, bestimmte Bedingungen gestellt, wie etwa dass der Spline (n-1)-mal stetig differenzierbar ist. Ein Spline kann beispielsweise durch mehrere programmierte oder geteachte Punkte definiert werden, wobei die genannten Punkte vom Manipulator punktgenau abgefahren werden.

Ein als Spline definierter Bahnabschnitt ist vorteilhaft, da der Bahnabschnitt als geschlossene mathematische Formel vorliegt und die aktuelle Position des Manipulators auf dem Bahnabschnitt in Abhängigkeit von einer skalaren Bahnfortschrittsvariablen angegeben werden kann. Die Bahnfortschrittsvariable gibt den Abstand von der aktuellen Position des Manipulators zu einem definierten Punkt der Bahn an, welcher Abstand auf der Bahn gemessen wird. Der definierte Punkt ist üblicherweise ein programmierter oder geteachter Punkt.

Bevorzugt wird die Lage des Bremspunktes auf der Bahn mittels einer Bahnfortschrittsvariablen der Bahn berechnet. Dies ist vorteilhaft, da der Bremspunkt besonders einfach berechnet werden kann, da es sich bei der Bahnfortschrittsvariablen um eine skalare Größe handelt.

### 4. Kurze Beschreibung der Figuren

Im Folgenden werden bevorzugte Ausführungsformen der Erfindung unter Bezugnahme auf die Zeichnungen im Detail erläutert; hierbei zeigt
- Fig. 1: eine Manipulatoranordnung umfassend einen Manipulator und eine Steuerungsvorrichtung;
- Fig. 2: eine exemplarische Bahn des Manipulators umfassend einen Haltepunkt und einen Bremspunkt;
- Figs. 3A - C: die Änderung der Geschwindigkeit des Manipulators in Abhängigkeit von der Fahrbedingungsvariable im normalen Betrieb, und
- Figs. 4A - B: die Änderung der Geschwindigkeit des Manipulators in Abhängigkeit von der Fahrbedingungsvariable im Falle eines Nothalts.

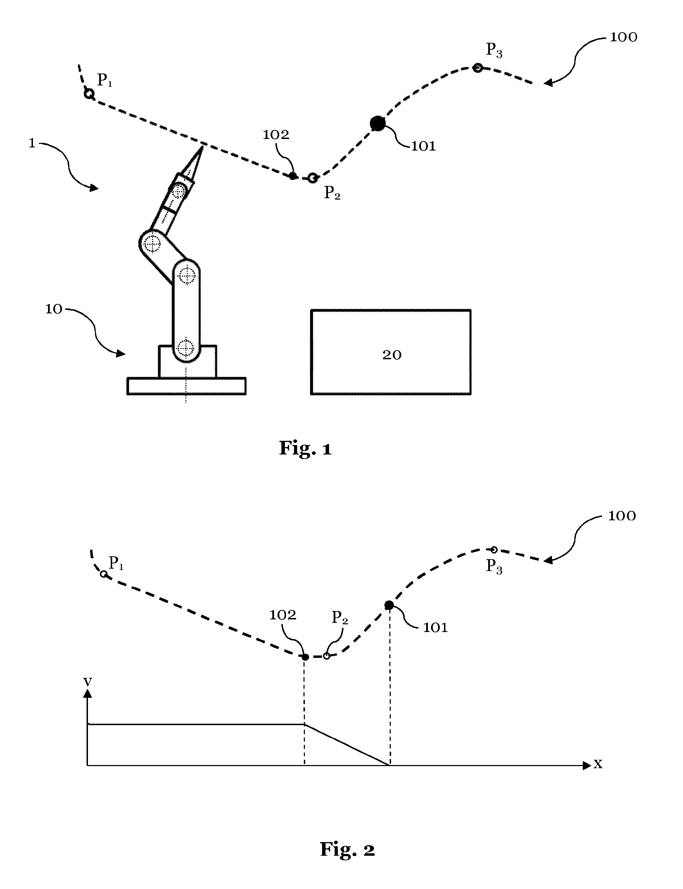

Fig. 1 zeigt eine Manipulatoranordnung 1, umfassend einen Manipulator 10 und eine Steuerungsvorrichtung 20. Der gezeigte Manipulator 10 ist dazu eingerichtet eine Bahn 100, welche als Spline definiert ist, abzufahren. Die Bahn 100 wird durch die Punkte P₁, P₂, P₃ definiert. Der gezeigte Haltepunkt 101 liegt auf der Bahn 100 und bestimmt den Punkt, in dem der Manipulator 10, falls ein Bremsen erforderlich ist, angehalten werden soll bzw. muss. Dem Haltepunkt 101 ist ein Bremspunkt 102 zugeordnet. Die Lage des Bremspunktes 102 wird von der Steuervorrichtung 20 in Abhängigkeit der Geschwindigkeit des Manipulators 10 berechnet; er ist also nicht fest vorgegeben, sondern von der Geschwindigkeit des Manipulators abhängig. Der Bremspunkt 102 ist der Punkt in dem mit dem Bremsen begonnen wird, wenn ein Bremsen erforderlich ist.

Fig. 2 zeigt schematisch eine exemplarische Bahn 100 des Manipulators 10, welche durch die Punkte P₁, P₂, P₃ als Spline definiert ist. Es ist weiter ein Diagramm gezeigt, in welchem die Geschwindigkeit v des Manipulators über der Bahnfortschrittsvariablen x aufgetragen ist. Die Darstellung ist als schematische Darstellung zu verstehen, und ist nicht maßstabsgetreu. Wie im Diagramm zu sehen, fährt der Manipulator 10 die Bahn 100 mit konstanter Geschwindigkeit ab. Die Bahn soll in Richtung von Punkt P₁ nach Punkt P₃ abgefahren werden. Im berechneten Bremspunkt 102 sei im dargestellten Fall der Zustand der Fahrbedingungsvariablen derart gesetzt, dass ein Bremsen erforderlich ist. Folglich bremst der Manipulator ab und hält im Haltepunkt 101 an. Die Geschwindigkeit des Manipulators im Haltepunkt ist wie gezeigt gleich null.

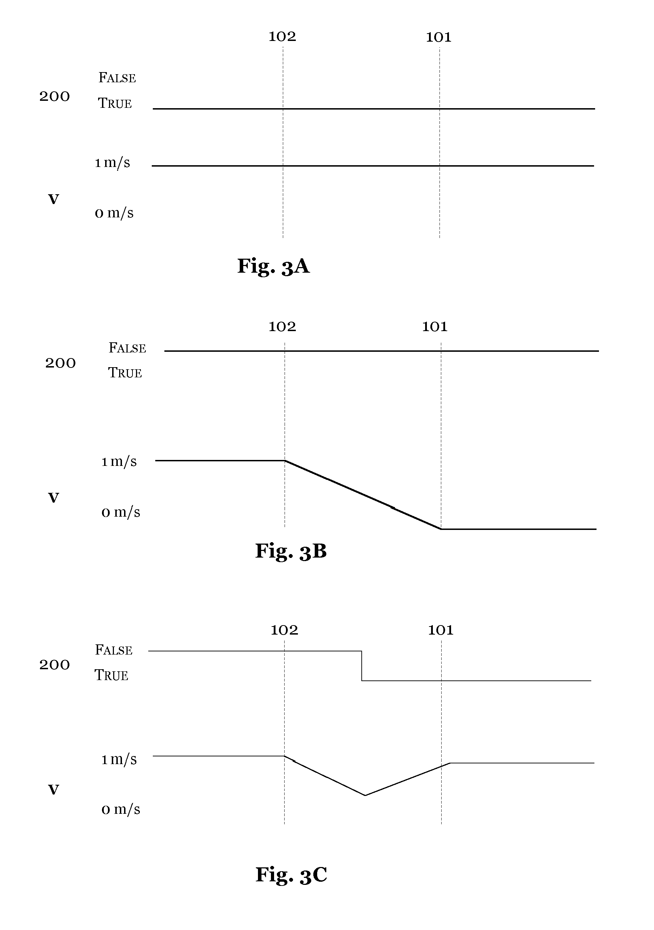

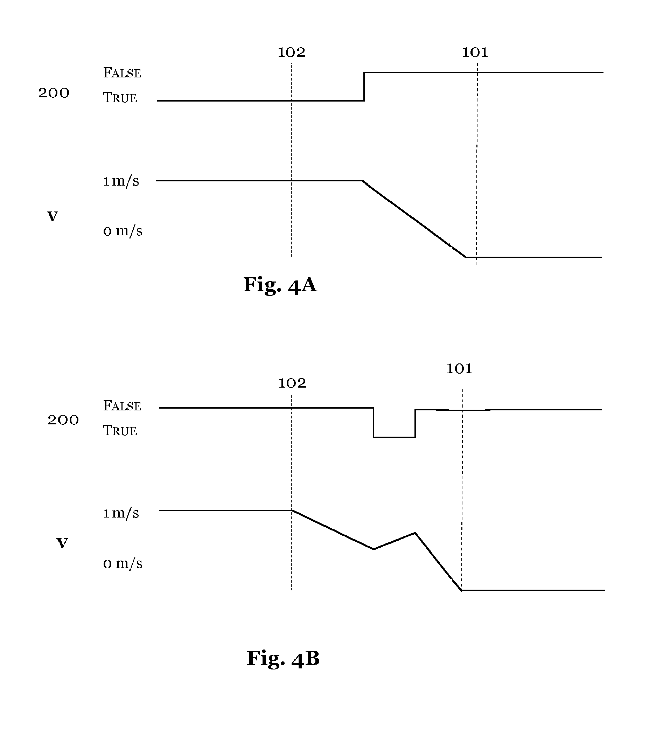

Die Figuren 3A bis 3C zeigen Diagramme von drei typischen Fällen des bedingten Anhaltens mit optimierten Bremsparametern und die Figuren 4A und 4B zeigen Diagramme von zwei typischen Fällen des bedingten Anhaltens, die ein Bremsen mit veränderter Bremswirkung erforderlich machen, um den Manipulator 10 bis zum Haltepunkt 101 anzuhalten. Dabei ist in jeder dieser Figuren zunächst der Zustand der Fahrbedingungsvariable 200 aufgetragen. Die Fahrbedingungsvariable 200 kann in den vorliegenden Beispielfällen die Werte TRUE und FALSE annehmen. Der Zustand TRUE erfordert kein Bremsen des Manipulators 10, der Zustand FALSE erfordert hingegen ein Bremsen des Manipulators 10. Unter der Fahrbedingungsvariablen 200 ist die Geschwindigkeit v des Manipulators 10 aufgetragen. Im vorliegenden Fall sei die geplante Geschwindigkeit v des Manipulators 10 gleich 1 m/s. Die mit Bezugszeichen 102 gekennzeichnete gestrichelte vertikale Linie entspricht dem Bremspunkt 102 auf der Bahn, die mit Bezugszeichen 101 gekennzeichnete gestrichelte vertikale Linie entspricht dem Haltepunkt 101.

Fig. 3A zeigt den Fall, in dem die Fahrbedingungsvariable 200 stets den Zustand TRUE einnimmt und somit kein Bremsen erforderlich ist. Im Beispiel der Pressenverkettung entspricht dies einer ständig geöffneten Presse. Entsprechend fährt der Manipulator, wie im Geschwindigkeitsdiagramm zu sehen, die Bahn ohne Geschwindigkeitsänderung ab.

Fig. 3B zeigt den Fall, in dem die Fahrbedingungsvariable 200 stets den Zustand FALSE einnimmt. Im Beispiel der Pressenverkettung entspricht dies einer ständig geschlossenen Presse. Folglich ist beim Überschreiten des berechneten Bremspunktes 102 ein Bremsen erforderlich. Wie im Geschwindigkeitsdiagramm zu sehen, wird der Manipulator ab dem Bremspunkt 102 gebremst und hält im Haltepunkt 101 an.

Fig. 3C zeigt den Fall, in dem die Fahrbedingungsvariable 200 zunächst den Zustand FALSE einnimmt. Nach dem Überschreiten des Bremspunktes 102 ändert sich der Zustand der Fahrbedingungsvariable 200 von FALSE zu TRUE. Im Beispiel der Presseverkettung entspricht dies einem Öffnen der Presse, nachdem der Manipulator den berechneten optimalen Bremspunkt 102 bereits überschritten hat. Da nun die Fahrbedingungsvariable erfüllt ist und ein Bremsen nicht mehr erforderlich ist, wird der Bremsvorgang abgebrochen. Der Manipulator wird wieder auf die geplante Geschwindigkeit 1 m/s beschleunigt.

Fig. 4A zeigte den Fall, in dem die Fahrbedingungsvariable 200 zunächst den Zustand TRUE einnimmt. Nach dem Überschreiten des Bremspunktes 102 ändert sich der Zustand der Fahrbedingungsvariable 200 von TRUE zu FALSE. Im Beispiel der Pressenverkettung entspricht dies einem Fehlverhalten, welches z.B. darauf zurückzuführen ist, dass sich die Presse zu schließen beginnt, nachdem der berechnete Bremspunkt 102 bereits überschritten ist. Wird während der zyklischen Überwachung der Fahrbedingungsvariable 200 eine solche Änderung des Zustands der Fahrbedingungsvariable 200 detektiert, so muss, um den Manipulator 10 im Haltepunkt 101 noch anhalten zu können, die Bremsung mit erhöhter Bremswirkung im Vergleich zu den optimierten Bremsparametern erfolgen. Im in Fig. 4A gezeigten Fall, wird aufgrund der erhöhten Bremswirkung der Manipulator bereits vor Erreichen des Haltepunktes 101 angehalten.

Fig. 4B zeigt den Fall, in dem die Fahrbedingungsvariable 200 zunächst den Zustand FALSE einnimmt und ein Bremsen erforderlich ist. Dieser Bremsvorgang wird, wie im Geschwindigkeitsdiagramm zu sehen, mit Erreichen des Bremspunkt des 102 eingeleitet. Anschließend ändert sich der Zustand der Fahrbedingungsvariablen 200 von FALSE zu TRUE. Folglich ist ein Bremsen nun nicht mehr erforderlich. Analog zum in Fig. 3C gezeigten Fall, wird der Bremsvorgang abgebrochen und der Manipulator wieder beschleunigt. Der Zustand der Fahrbedingungsvariable 200 ändert sich im gezeigten Fall jedoch erneut, nämlich von TRUE zu FALSE. Folglich ist nun wieder ein (starkes) Bremsen des Manipulators 10 erforderlich. Um den Manipulator 10 im Haltepunkt 101 anhalten zu können, ist nun eine Bremsung mit erhöhter Bremswirkung notwendig. Im gezeigten Fall kann aufgrund der erhöhten Bremswirkung der Manipulator 10 im Haltepunkt 101 angehalten werden.

### Bezugszeichenliste

- **1**: Manipulatoranordnung
- **10**: Manipulator
- **20**: Steuerungsvorrichtung
- **100**: Bahn
- **101**: Haltepunkt
- **102**: Bremspunkt
- **200**: Fahrbedingungsvariable
- **v**: Manipulatorgeschwindigkeit
- **x**: Bahnfortschrittsvariable
- **P₁,P₂,P₃**: Definitionspunkte der Bahn

## Patentansprüche

1. Verfahren zum bedingten Anhalten zumindest eines Manipulators (10), wobei
der zumindest eine Manipulator (10) eine Bahn (100) abfährt, welche Bahn (100) einen Haltepunkt (101) aufweist, und das Verfahren den folgenden Verfahrensschritt umfasst:
Berechnen eines, dem Haltepunkt (101) zugeordneten Bremspunktes (102) in Abhängigkeit einer Geschwindigkeit (v) des Manipulators (10), wobei der Bremspunkt (102) ein Punkt der Bahn (100) ist.

2. Verfahren zum bedingten Anhalten zumindest eines Manipulators (10) nach Anspruch 1, wobei das Verfahren die weiteren Schritte umfasst:
Überprüfen des Zustands einer Fahrbedingungsvariable (200), nach der Berechnung des Bremspunktes (102);
Bremsen des Manipulators (10), falls der Zustand der Fahrbedingungsvariablen (200) beim Überschreiten des berechneten Bremspunktes (102) ein Bremsen erforderlich macht.

3. Verfahren zum bedingten Anhalten zumindest eines Manipulators (10) nach Anspruch 2, wobei
der Zustand der Fahrbedingungsvariable (200) zyklisch überwacht wird, und
bei einem eingeleiteten Bremsvorgang der Manipulator wieder beschleunigt wird, wenn sich der Zustand der Fahrbedingungsvariable (200), während des Bremsens des Manipulators (10) ändert.

4. Verfahren zum bedingten Anhalten zumindest eines Manipulators (10) nach einem der Ansprüche 2 oder 3, wobei die Bremswirkung während eines Bremsvorgangs in Abhängigkeit von einer Fahrbedingungsvariablen (200) angepasst wird, so dass der Manipulator (10) spätestens am Haltepunkt (101) anhält.

5. Manipulatoranordnung (1) umfassend zumindest einen Manipulator (10) und zumindest eine Steuerungsvorrichtung (20),
wobei der zumindest eine Manipulator (10) dazu eingerichtet ist eine Bahn (100) abzufahren und die Bahn (100) einen Haltepunkt (101) aufweist, und die zumindest eine Steuerungsvorrichtung (20) dazu eingerichtet ist,
einen dem Haltepunkt (101) zugeordneten Bremspunkt (102) in Abhängigkeit einer Geschwindigkeit (v) des Manipulators (10) zu berechnen, wobei der Bremspunkt (102) ein Punkt der Bahn (100) ist.

6. Manipulatoranordnung (1) nach Anspruch 5, wobei die Steuerungsvorrichtung (20) weiter dazu eingerichtet ist den Zustand einer Fahrbedingungsvariable (200) zu überprüfen; und
einen Befehl zum Bremsen des Manipulators (10) zu senden, falls der Zustand der Fahrbedingungsvariable (200) ein Bremsen erforderlich macht.

7. Manipulatoranordnung (1) nach Anspruch 6, wobei die Steuerungsvorrichtung (20) weiter dazu eingerichtet ist,
den Zustand der Fahrbedingungsvariable (200) zyklisch zu überwachen, und
bei einem eingeleiteten Bremsvorgang des Manipulators einen Befehl zum Beschleunigen des Manipulators (10) zu senden, wenn sich der Zustand der Fahrbedingungsvariable (200), während des Bremsens des Manipulators (10) ändert.

8. Manipulatoranordnung (1) nach einem der vorhergehenden Ansprüche 6 oder 7, wobei die Bremswirkung während eines Bremsvorgangs in Abhängigkeit von der Fahrbedingungsvariablen (200) anpassbar ist, so dass der Manipulator (10) spätestens am Haltepunkt (101) vollständig stoppt.

9. Verfahren oder Manipulatoranordnung (1) nach einem der vorhergehenden Ansprüche, wobei das Bremsen des Manipulators (10) bahntreu erfolgt.

10. Verfahren oder Manipulatoranordnung (1) nach einem der vorhergehenden Ansprüche, wobei die Bahn (100) zumindest einen Bahnabschnitt umfasst, der ein Spline ist.

11. Verfahren oder Manipulatoranordnung (1) nach einem der vorhergehenden Ansprüche, wobei die Lage des Bremspunktes (102) auf der Bahn (100) mittels einer Bahnfortschrittsvariablen (x) der Bahn (100) berechnet wird.
